(19) Europäisches Patentamt
European Patent Office
Office européen des brevets

(11) Veröffentlichungsnummer: **0 012 946**
**B1**

(12) **EUROPÄISCHE PATENTSCHRIFT**

(45) Veröffentlichungstag der Patentschrift: **15.06.83**

(51) Int. Cl.³: **H 01 B 3/04,** H 02 K 3/30, C 08 L 63/00, C 08 G 63/68

(21) Anmeldenummer: **79105150.1**

(22) Anmeldetag: **13.12.79**

(54) **Verfahren zur Herstellung von Wickelbändern für die Hochspannungsisolierung elektrischer Maschinen und Apparate und Wickelband zur Herstellung einer Isolierhülse für elektrische Leiter.**

(30) Priorität: **28.12.78 DE 2856562**

(43) Veröffentlichungstag der Anmeldung: **09.07.80 Patentblatt 80/14**

(45) Bekanntmachung des Hinweises auf die Patenterteilung: **15.06.83 Patentblatt 83/24**

(84) Benannte Vertragsstaaten: **AT CH DE GB SE**

(56) Entgegenhaltungen:
**DE-A-1 613 273**
**DE-B-1 219 554**
**GB-A-572 671**
**US-A-3 128 265**

(73) Patentinhaber: **KRAFTWERK UNION AKTIENGESELLSCHAFT, Wiesenstrasse 35, D-4330 Mülheim (Ruhr) (DE)**

(72) Erfinder: **Schuh, Heinz, Dr., Quellenweg 8, D-4220 Dinslaken (DE)**

(74) Vertreter: **Mehl, Ernst, Dipl.-Ing., Postfach 22 01 76, D-8000 München 22 (DE)**

**EP 0 012 946 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von Wickelbändern für die Hochspannungsisolierung elektrischer Maschinen und Apparate und Wickelband zur Herstellung einer Isolierhülse für elektrische Leiter

Die Erfindung bezieht sich auf ein Verfahren zur Herstellung von Klebe- und Beschleunigerharz enthaltenden Wickelbändern gemäß dem Oberbegriff des Patentanspruchs 1 und auf ein Wickelband zur Herstellung einer mit einer heißhärtenden Epoxidtränkharzmischung imprägnierten Isolierhülse für elektrische Leiter gemäß dem Oberbegriff des Patentanspruchs 6.

Ein derartiges Verfahren und ein derartiges Wickelband sind aus der DE-A-1 613 273 bekannt.

In der Isolierstofftechnik, insbesondere bei der mit heißhärtendem Epoxidharz zu tränkenden Hochspannungsisolierung elektrischer Maschinen und Apparate besteht das Problem, lagerstabile und flexible Kunstharzsysteme zu entwickeln, welche gleichzeitig als Bandkleber für Wickelbänder und als Beschleuniger für die nachfolgende Epoxidharzhärtung eingesetzt werden können. Die Hochspannungswicklungen elektrischer Maschinen und Apparate, insbesondere handelt es sich hierbei um Turbogeneratoren, Transformatoren oder Teilen derselben, werden zwecks Isolierung mit glimmerhaltigen Wickelbändern umbandelt. Zum Imprägnieren der umwickelten bzw. umbandelten Teile werden große Tränkwannen mit Imprägnierungsharzen verwendet, in welche die herzustellenden Produkte getaucht werden. Die verbrauchte Harzquantität ist hierbei gering im Verhältnis zur Harzmenge in der Tränkwanne; sie wird bei Bedarf durch Nachfüllen von Harz ersetzt. Es ist dabei von großer Bedeutung, daß das Harz in der Tränkwanne eine möglichst lange Zeit seine Eigenschaften beibehält, u. a. seine Viskosität, so daß für jedes zu imprägnierende Produkt dieselben Imprägnierungsbedingungen angewendet werden können, d. h., daß das Aufrechterhalten der konstanten Eigenschaften des ausgehärteten Harzes nicht auf Kosten der wünschenswerten oder anwendbaren Härtungsbedingungen geschieht. Als Harz-Härtersystem wird vorzugsweise ein heißhärtendes Epoxidharz verwendet auf der Basis von bi- oder höherfunktionellen Glycidyläthern bzw. von Epoxidverbindungen und Säureanhydriden, deren Viskosität bei der Tränkung weniger als 30 mPa · s beträgt (bei ca. 60 bis 70° C).

In der Isolierstofftechnik wird hierzu der Beschleuniger für das härtbare Kunstharz nach bisher bekanntem Stand der Technik entweder durch Tauchen des Wickelbandes in eine Lösung des Beschleunigers (DE-B-1 219 554) oder durch Einlagerung des Beschleunigers in das Bindemittel, welches als Kleber zwischen Unter- und Oberseite des Wickelbandes wirkt, eingebracht. Letzteres ist aus der eingangs genannten DE-A-1 613 273 bekannt. Dabei handelt es sich bei den in das Klebeharz eingelagerten Beschleunigern um Beschleunigerharze auf Epoxidharzbasis mit tertiär gebundenem Aminstickstoff, welche gleichzeitig als Klebeharze dienen. Aus der DE-B-1 162 898 ist es auch bekannt, in das Klebeharz eingelagerte Epoxidharz-Härtungsbeschleuniger auf Basis tertiärer Amine, wie z. B. 4,4'-Dimethylaminodiphenylmethan zu verwenden.

Der Nachteil dieser Depotharzsysteme liegt in der zeitlich begrenzten Lagerstabilität, bedingt durch anionische Polymerisation des Klebeharzes durch das eingelagerte tertiäre Amin. Diese Polymerisation führt zu Verhärtungen, welche die Verwickelbarkeit des Wickelbandes beeinträchtigen. Bei den Beschleunigerharzen auf Epoxidharzbasis mit tertiär gebundenem Aminstickstoff, welche in situ eingesetzt werden, ist außerdem ein flächenförmiger Auftrag nicht möglich, da es sich bei diesen Harzen um Festharze handelt, so daß die Imprägnierung des Bandes dem niedrigviskosen Tränkharzgemisch auf Epoxidharzbasis schwierig ist. Diese Schwierigkeit versucht man durch punktförmigen Auftrag des Beschleunigers in gerade zur Verklebung ausreichender Menge zu beheben (DE-B-2 215 206).

Der Erfindung liegt die Aufgabe zugrunde, das Verfahren der eingangs genannten Art so zu verbessern, daß eine Alterung oder Verhärtung des Wickelbandes oder der Tränkharzmischung vermieden wird. Es ist weiterhin Aufgabe der Erfindung, das Verfahren so auszugestalten, daß die Flexibilität, die Reaktivität und die Konsistenz des verwendeten Klebe- und Beschleunigerharzes auf einfache Weise zu steuern sind.

Erfindungsgemäß wird die gestellte Aufgabe durch die im kennzeichnenden Teil des Patentanspruchs 1 angegebenen Merkmale gelöst. Weiterbildungen des erfindungsgemäßen Verfahrens sind in den Ansprüchen 2 bis 5 enthalten. Gegenstand der Erfindung ist auch ein Wickelband gemäß Anspruch 6.

Aus der GB-A-572 671 und der US-A-3 128 265 sind tertiär gebundenen Stickstoff enthaltende Polyesterharze als solche bzw. im Gemisch mit Epoxidharzen bekannt. Ein Hinweis auf den erfindungsgemäßen Einsatz derartiger Polyesterharze als Klebe- und Beschleunigerharze bei der Herstellung von Wickelbändern ist diesen Druckschriften jedoch nicht zu entnehmen.

Die mit der Erfindung erzielbaren Vorteile sind vor allem in folgendem zu sehen: Durch die Wahl der Dicarbonsäure und des Glykols har man es in der Hand, die Flexibilität und die Reaktivität des Polyesterharzes zu variieren. Die erfindungsgemäß eingesetzten Polyesterharze besitzen keine vernetzungsfähigen Gruppen, so daß Lagerstabilität, Flexibilität und Verarbeitbarkeit gewährleistet bleiben. Die als Bindemittel dienenden Polyesterharze können außerdem flächenförmig aufgetragen werden, so daß eine innige Durchmischung des Bindemittels mit dem Tränkharz erzielbar ist.

Die Erfindung wird im folgenden anhand mehrerer Ausführungsbeispiele, die z. T. in der Zeichnung

dargestellt sind, noch näher erläutert. Es zeigt

Fig. 1 ein Wickelband in perspektivischer Darstellung im Ausschnitt, für das ein Polyesterharz als Klebe- und Beschleunigerharz verwendet ist,

Fig. 2 in entsprechender Darstellung zu Fig. 1 die Isolierhülse des Wicklungsstabes einer elektrischen Maschine, welche mit einem Wickelband nach Fig. 1 umbandelt ist.

Das als Ganzes mit G bezeichnete Wickelband nach Fig. 1 besteht aus einer flexiblen Trägerfolie 1 aus Polyestervlies mit einem Flächengewicht von ca. 20 bis 25 g/m². Als Trägerfolie 1 könnte auch ein Japanpapier oder ein Glasgewebe verwendet sein. Auf die Trägerfolie 1 ist als Bindemittel eine Schicht 2 aus Klebe- und Beschleunigerharz aufgebracht, z. B. aufgespritzt oder aufgestrichen, mit einem Flächengewicht von ca. 20 g/m². Als Lösemittel für das Klebe- und Beschleunigerharz ist z. B. Methyläthylketon geeignet, welches nach dem Auftragen verdampft, ggf. unter Wärmezufuhr. Dieses Klebe- und Beschleunigerharz ist ein Polyesterharz, welches tertiär gebundenen Stickstoff enthält. Es wird weiter unten noch näher beschrieben. Wesentlich ist, daß das Klebe- und Beschleunigerharz 2 die Polyadditionsreaktion der heißhärtenden Epoxidtränkharzmischung anregt, aber selbst keiner Alterung unterliegt, da es keine Epoxidharzverbindungen enthält. Auf die Schicht 2 des Klebe- und Beschleunigerharzes ist eine Schicht 3 aus Spaltglimmer aufgebracht, welche ein Flächengewicht von ca. 230 g/m² aufweist. Die einzelnen Glimmerblättchen 3a sind in die Klebschicht 2 eingebettet und überlappen einander, so daß eine durchschlagfeste Isolierschicht gebildet ist. Auf die Spaltglimmerschicht 3 ist noch eine weitere Schicht 4 aus Beschleuniger- und Klebeharz aufgetragen, und auf diese Klebschicht 4 ist dann die Decklage 5, gleichfalls aus einem Polyestervlies bestehend, aufgebracht. Auch die Decklage 5 kann an Stelle von Polyestervlies aus Japanpapier oder einer Glas-Gewebeschicht bestehen. Die Glimmerblättchen 3a sind mithin mit der Trägerfolie 1 und der Decklage 5 und untereinander verklebt, wobei die Viskosität der Schicht 2 so gewählt ist, daß das Wickelband G sich leicht verarbeiten, d. h. verwickeln läßt. Gemäß einer Variante kann anstelle der beschriebenen Spaltglimmerschicht 3 auch eine Feinglimmerschicht verwendet werden, wobei die Flächengewichte des Feinglimmers bei ca. 150 g/m² und des Klebers bei 8 g/m² liegen. Anstelle eines Polyestervlieses als Trägerfolie wird bei eine Feinglimmerschicht vorzugsweise ein Glasgewebe mit einem Flächengewicht von ca. 22 bis 27 g/m² verwendet.

Zur Herstellung der Isolierhülse des Wicklungsstabes einer elektrischen Maschine, wird das Wickelband G nach Fig. 1 so wie in Fig. 2 angedeutet um den Wicklungsstab 6 der elektrischen Maschine herumgewickelt. Dieser Wicklungsstab 6 besteht aus einzelnen Teilleitersäulen 6.1, welche jeweils mit einer separaten Teilleiterisolation 6.2 umbandelt sind. Die Säulen 6.1 wiederum sind zum Stab 6 vereinigt. Nach dem Umwickeln des Wicklungsstabes 6 mit dem Wickelband G wird dieser, ggf. nach vorausgegangener Trocknung, unter Vakuum mit einer heißhärtenden Epoxidtränkharzmischung auf der Basis von bi- oder höherfunktionellen Glycidyläthern bzw. Epoxidverbindungen und Säureanhydriden getränkt. Die Imprägniertemperatur beträgt hierbei etwa 60 bis 70°C, damit gewährleistet ist, daß die Viskosität der Epoxidtränkharzmischung bei der Tränkung geringer als 30 mPa · s ist und mithin die auf den Wicklungsstab 6 aufgewickelte Hülse vollständig getränkt wird. Anschließend wird dann die überschüssige Tränkharzmischung zurückgepumpt. Sie kann noch mehrmals verwendet werden, da ihre Gebrauchsdauer (Topfzeit) ein Vielfaches der für einen Tränkzyklus benötigten Zeit beträgt. Der die auf den Wicklungsstab 6 aufgewickelte Hülse durchsetzende Teil der bei der Imprägniertemperatur dünnflüssigen Epoxidtränkharzmischung löst den im Wickelband G enthaltenen Beschleuniger. Der Anteil des Beschleunigers an der in der aufgewickelten Isolierhülse enthaltenen Tränkharzmischung beträgt dabei etwa 15%. Dieser Beschleuniger bewirkt nun das schnelle Einsetzen der Polyadditionsreaktion zwischen den in die aufgewickelte Hülse eindiffundierten Epoxidverbindungen einschließlich des Säureanhydridhärters, so daß die in der Hülse enthaltenen Harzkomponenten zunächst gelieren, wobei im allgemeinen eine Gelierzeit von 5 bis 6 Stunden erwünscht ist. Vor Ablauf der Gelierzeit, im allgemeinen etwa binnen einer Stunde nach Herausnahme der Wicklungsstäbe aus dem Tränkbad, werden diese in eine Presse eingelegt, wobei jetzt die Viskosität des Harzes noch klein genug ist, daß überschüssiges Harz beim Pressen herausquellen kann. Nach beendetem Geliervorgang werden dann die in den Pressen befindlichen Wicklungsstäbe in die Härtevorrichtung eingebracht, wobei die Aushärtzeit dadurch verkürzt werden kann, daß die Verarbeitungstemperatur im Härteofen auf über 100°C erhöht wird.

Im folgenden werden nun noch drei Beispiele für die Zusammensetzung des Beschleuniger- und Klebeharzes 2 bzw. 4 gegeben, welche zeigen, daß nach der Erfindung auf einfache Weise durch Festlegung des Stickstoffgehaltes eine Steuerung der Reaktivität, der Gelierzeit und der Viskosität ermöglicht ist. Die Beispiele beziehen sich auf die sogenannte Polyveresterung.

## Beispiel 1

Zunächst sei die grundsätzliche chemische Reaktion erläutert.

Dicarbonsäure: Adipinsäure $HOOC-(CH_2)_4-COOH$ wird in Reaktion gebracht mit Glykol: N-Methyldiäthanolamin, d. h.

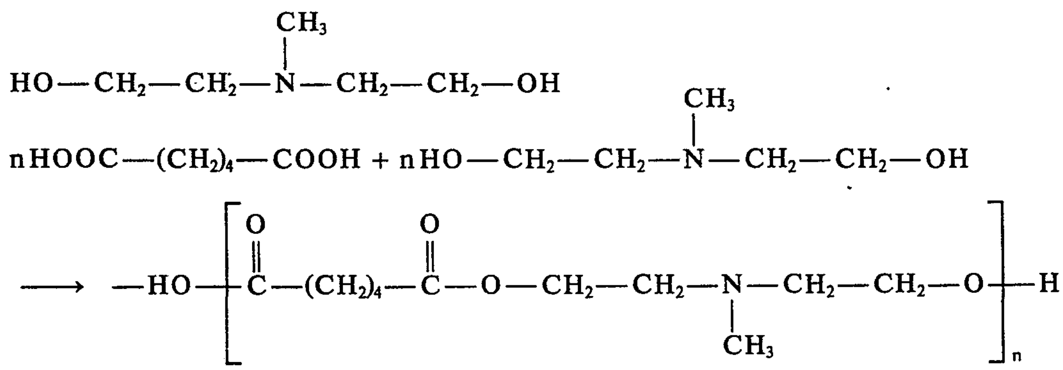

Bruttoformel des für die Eigenschaften maßgebenden Grundbausteins:

$C_{11}H_{19}NO_4$.

Im einzelnen wurden 146 g Adipinsäure und 119 g N-Methyldiäthanolamin in einen Dreihalskolben eingewogen. Die Mischung wurde ca. 12 Stunden bei 100°C unter Stickstoff vorkondensiert. Danach wurde das entstehende Kondensationswasser – zum Schluß unter Anlegen von Wasserstrahlvakuum – bei 100°C unter Stickstoff abdestilliert. Die Kondensation ist beendet, wenn die dem Ansatz entsprechende äquivalente Menge Wasser überdestilliert ist.

| | |
|---|---|
| Die Gelierzeit bei 70°C und 1% Beschleuniger, bezogen auf Harz/Härter 1 : 1 betrug | 5 Stunden |
| Stickstoffgehalt: | theoretisch: 6,11%, gefunden: 5,39% |
| Viskosität (22°C): | 26 500 mPa · s |
| Viskosität (70°C): | 797 mPa · s |

Durch Einsatz einer entsprechenden Menge eines Diglykols hat man es in der Hand, den Stickstoffgehalt zu reduzieren und somit jede gewünschte Reaktivität und Gelierzeit einzustellen, wie es das Beispiel 1 in Verbindung mit den folgenden Beispielen 2 und 3 zeigt.

## Beispiel 2

Es wird eine Gelierzeit von 6 Stunden bei 70°C gewünscht bei einem Beschleunigergehalt von 15%, bezogen auf die Epoxidharz-Säureanhydridmischung (1 : 1). Durch Berechnung erhält man einen erforderlichen Stickstoffgehalt von 0,48% Stickstoff.
Daraus ergibt sich folgende Rezeptur:

| | |
|---|---|
| Adipinsäure | 1 Mol |
| N-Methyldiäthanolamin | 0,06 Mol |
| Äthylenglykol | 0,94 Mol |

### Herstellung

146 g Adipinsäure, 58,35 g Äthylenglykol, 7,15 g N-Methyldiäthanolamin wurden in einen Dreihalskolben eingewogen. Die Mischung wurde ca. 12 Stunden bei 100° unter Stickstoff vorkondensiert. Danach wurde das entstehende Kondensationswasser – zum Schluß unter Anlegen von Wasserstrahlvakuum – bei 100°C unter Stickstoff abdestilliert. Die Kondensation ist beendet, wenn die dem Ansatz entsprechende äquivalente Menge Wasser überdestilliert ist.

| | |
|---|---|
| Die Gelierzeit bei 70° (15% Beschleuniger, bezogen auf Harz/Härter 1 : 1) betrug | 6 Stunden |
| Stickstoffgehalt: | 0,48% N (theoretisch); 0,46% N (gefunden) |
| Viskosität (25°C): | kristallisiert |
| Viskosität (70°C): | 614 mPa · s |

Beispiel 3

Um die Verarbeitbarkeit zu verbessern (Auftrag), wurde ein Teil der Adipinsäure durch Methylhexahydrophthalsäureanhydrid ersetzt. Der entstehende Polyester ist hochviskos und kann flächenförmig aufgetragen werden.

| | |
|---|---|
| Rezeptur: | |
| Adipinsäure | 0,5 Mol |
| N-Methyldiäthanolamin | 0,06 Mol |
| Äthylenglykol | 0,94 Mol |
| Methylhexahydrophthalsäureanhydrid | 0,5 Mol (Härter »M«) |
| Stickstoffgehalt: | N (theoretisch): 0,40%; $N_{gef}$: 0,41% |
| Gelierzeit (70° C): | 6 Stunden (15% Beschleuniger, bez. auf Harz/Härter 1 : 1) |
| Viskosität (22° C): | 600 000 mPa · s |
| Viskosität (70° C): | 2 800 mPa · s |

Herstellung

73 g Adipinsäure, 58,35 g Äthylenglykol, 7,15 g N-Methyldiäthanolamin, 84 g Methylhexahydrophthalsäureanhydrid werden in einen Dreihalskolben eingewogen. Die Mischung wird ca. 12 Stunden bei 100° C unter Stickstoff vorkondensiert. Danach wird das entstehende Kondensationswasser — zum Schluß unter Anlegen von Vakuum bei 100° C unter Stickstoff — abdestilliert. Die Kondensation ist beendet, wenn die dem Absatz entsprechende Menge Wasser überdestilliert ist.

**Patentansprüche**

1. Verfahren zur Herstellung von Klebe- und Beschleunigerharz sowie Glimmer enthaltenden Wickelbändern für die mit einem heißhärtenden Epoxidharz zu tränkende Hochspannungsisolierung elektrischer Maschinen und Apparate, dadurch gekennzeichnet, daß als Klebe- und Beschleunigerharz Polyesterharze verwendet werden, welche tertiär gebundenen Stickstoff enthalten und durch Kondensation äquimolarer Mengen einer Dicarbonsäure oder eines Dicarbonsäureanhydrides und eines tertiär gebundenen Stickstoff enthaltenden Glykols unter Abdestillation des bei der Kondensation entstehenden Wassers erhalten werden.

2. Verfahren nach Anspruch 1, dadurch gekennzeichnet, daß Polyesterharze verwendet werden, die erhalten werden, indem man Adipinsäure und N-Methyldiäthanolamin miteinander mischt und bei einer Temperatur von mindestens 100° C ca. 12 Stunden vorkondensiert und das entstehende Kondensationswasser bei 100° C abdestilliert.

3. Verfahren nach Anspruch 1 oder 2, dadurch gekennzeichnet, daß Polyesterharze verwendet werden, bei denen zur Einstellung der gewünschten Reaktivität ein Teil des tertiär gebundenen Stickstoff enthaltenden Glykols durch ein stickstofffreies Glykol ersetzt ist.

4. Verfahren nach Anspruch 2 und 3, dadurch gekennzeichnet, daß ein Teil des N-Methyldiäthanolamins durch Äthylenglykol ersetzt ist.

5. Verfahren nach Anspruch 4, dadurch gekennzeichnet, daß ein Teil der Adipinsäure durch Methylhexahydrophthalsäureanhydrid ersetzt ist.

6. Wickelband zur Herstellung einer mit einer heißhärtenden Epoxidtränkharzmischung imprägnierten Isolierhülse für elektrische Leiter, insbesondere für die Wicklungsstäbe bzw. -spulen elektrischer Maschinen, bestehend aus auf eine flexible Unterlage aufgebrachten Glimmerblättchen, die mit der Unterlage und miteinander sowie ggf. mit einer abschließenden Decklage mittels eines als Klebe- und Beschleunigerharz dienenden Bindemittels verklebt sind, dadurch gekennzeichnet, daß das Klebe- und Beschleunigerharz ein Polyesterharz ist, welches tertiär gebundenen Stickstoff enthält.

**Claims**

1. A process for the production of winding tapes, containing adhesive- and accelerating-resin and also mica, for high-voltage insulation of electrical machines and apparatus, which insulation is to be impregnated with a heat-hardening epoxy resin, characterised in that as adhesive- and accelerating-resins, there are used polyester resins which contain tertiary-bonded nitrogen and which are obtained by the condensation of equimolar quantities of a dicarboxylic acid, or a dicarboxylic acid anhydride, and a glycol containing tertiary-bonded nitrogen, with the distillation-off of the water formed during the condensation.

2. A process as claimed in Claim 1, characterised in that polyester resins are used which are obtained

by mixing adipic acid and N-methyldiethanolamine with one another and effecting a preliminary condensation at a temperature of at least 100° C for about 12 hours, the water of condensation formed being distilled-off at 100° C.

3. A process as claimed in Claim 1 or Claim 2, characterised in that polyester resins are used in which, in order to set the required reactivity, a portion of the glycol containing tertiary-bonded nitrogen is replaced by a glycol which does not contain nitrogen.

4. A process as claimed in Claim 2 and 3, characterised in that, a part of the N-methyldiethanolamine is replaced by ethylene glycol.

5. A process as claimed in Claim 4, characterised in that a part of the adipic acid is replaced by methylhexahydro-phthalic acid anhydride.

6. A winding tape for the production of an insulating sleeve for electrical conductors, which is impregnated with a heat-hardening epoxy-impregnating resin mixture, in particular for the winding rods or winding coils of electric machines, said tape consisting of mica flakes applied on a flexible support and which are stuck to the support and to one another, and, if necessary, to a final top layer, by means of a bonding agent which serves as an adhesive- and accelerating resin, characterised in that the adhesive- and accelerating-resin is a polyester resin which contains tertiary-bonded nitrogen.

**Revendications**

1. Procédé de production de rubans d'enroulement contenant une résine adhésive et d'accélérateur, ainsi que du mica, pour l'isolation à haute tension, à imprégner d'une résine époxyde durcissant à chaud, de machines et appareils électriques, caractérisé en ce qu'il consiste à utiliser comme résine adhésive et d'accélérateur des résines de polyester qui contiennent un atome d'azote tertiaire et qui sont obtenues par condensation de quantités équimolaires d'un acide dicarboxylique ou d'un anhydride d'acide dicarboxylique et d'un glycol à azote tertiaire avec élimination par distillation de l'eau qui se forme lors de la condensation.

2. Procédé suivant la revendication 1, caractérisé en ce qu'il consiste à utiliser des résines de polyester qui sont obtenues en mélangeant l'un à l'autre de l'acide adipique et de la N-méthyldiéthanolamine et en les précondensant à une température d'au moins 100°C pendant 12 heures environ et en éliminant à 100° C l'eau de condensation qui se forme.

3. Procédé suivant la revendication 1 ou 2, caractérisé en ce qu'il consiste à utiliser des résines de polyester, dans lesquelles, pour le réglage de la réactivité souhaitée, une partie du glycol contenant l'azote tertiaire est remplacée par un glycol non azoté.

4. Procédé suivant les revendications 2 et 3, caractérisé en ce qu'une partie de la N-méthyldiéthanolamine est remplacée par de l'éthylèneglycol.

5. Procédé suivant la revendication 4, caractérisé en ce qu'une partie de l'acide adipique est remplacée par de l'anhydride d'acide hexahydrophtalique.

6. Ruban d'enroulement pour la production d'une gaine isolante imprégnée d'un mélange d'imprégnation résineux d'époxyde durcissant à chaud, pour des conducteurs électriques, notamment pour les barres et bobines d'enroulements de machines électriques, constitué de feuilles de mica déposées sur un support souple et qui sont collées au support et les unes avec les autres, ainsi éventuellement qu'à une couche de couverture finale à l'aide d'un agent liant servant de résine adhésive et d'accélérateur, caractérisé en ce que la résine servant d'adhésif et d'accélérateur est une résine de polyester. qui contient un azote tertiaire.

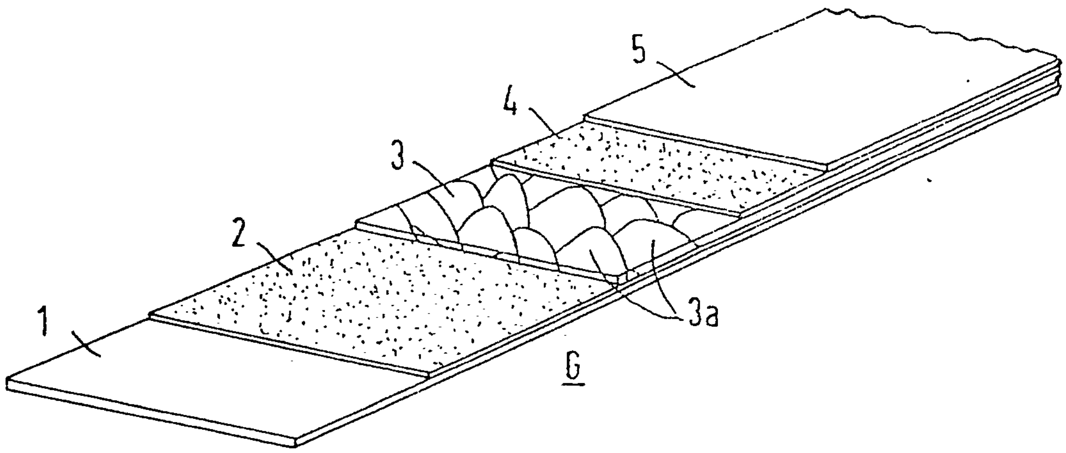


FIG 1

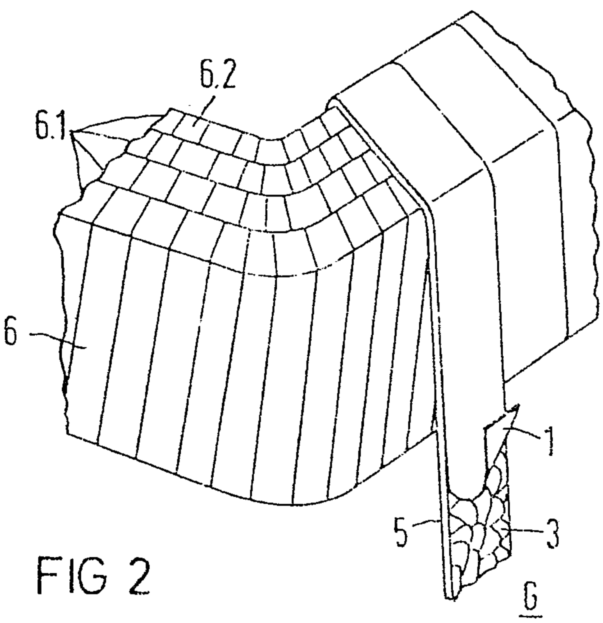


FIG 2